(19) **Europäisches Patentamt**

**European Patent Office**

**Office européen des brevets**

(11) Publication number : **0 296 671 B1**

(12) **EUROPEAN PATENT SPECIFICATION**

(45) Date of publication of patent specification :
**27.11.91 Bulletin 91/48**

(51) Int. Cl.⁵ : **B25H 1/00, B32B 17/10**

(21) Application number : **88201224.8**

(22) Date of filing : **15.06.88**

(54) **Support device for the injector with which plastic material is injected into a break of a laminated pane.**

(30) Priority : **16.06.87 NL 8701399**

(43) Date of publication of application :
**28.12.88 Bulletin 88/52**

(45) Publication of the grant of the patent :
**27.11.91 Bulletin 91/48**

(84) Designated Contracting States :
**AT BE CH DE ES FR GB GR IT LI LU NL SE**

(56) References cited :
**CH-A- 514 384**
**FR-A- 2 285 972**
**US-A- 3 347 327**
**US-A- 3 993 520**
**US-A- 4 291 866**
**US-A- 4 468 159**

(73) Proprietor : **Schollen, Hendrikus Andreas Petrus Maria**
**Caddenbosch 9**
**NL-5051 VA Goirle (NL)**

(72) Inventor : **Schollen, Hendrikus Andreas Petrus Maria**
**Caddenbosch 9**
**NL-5051 VA Goirle (NL)**

(74) Representative : **Lips, Hendrik Jan George, Ir. et al**
**HAAGSCH OCTROOIBUREAU Breitnerlaan 146**
**NL-2596 HG Den Haag (NL)**

## Description

The invention relates to a support device for an injector with which plastic material is injected into a break of a laminated pane, in particular a windshield of a motor car, said device comprising : a plate shaped body ; three legs being connected with said body for supporting the body onto the windshield ; a column being connected to said body and being movable perpendicularly to the surface of said body ; a suction cup being connected to the column for fixing said body onto the windshield ; means for moving the column in respect of the body ; an arm which is pivotally connected to the body and is carrying said injector and means for pushing said injector to the windshield after the body is fixed to the windshield.

Such a device is known by the US-A-4,291,866. In case of this known device the arm carrying the injector is fixedly connected to a rod positioned perpendicular to the plate shaped body and being rotatably supported by said body by means of a sleeve positioned near one of said legs which are connected to said body.

In view of this the injector may describe part of a circular arc around the axis of the rod but in most cases this will not suffice to bring the injector on its place when the support device, by means of the suction cup, is fixed on the windshield but not exactly at a given place.

Further a disadvantage of the known device is, that it is not easily possible to pivot the injector away from the given place after having injected plastic material in a break and to bring the injector back again exactly at the same place when it appears that in the break not yet sufficient plastic material is present.

It is the object of the present invention to overcome the drawbacks of the prior art.

The object of the invention is achieved by a support device in which the arm carrying the injector is formed by a strip the end of which, opposite the end carrying the injector, can be clamped on a support element in various positions, within given limits, substantially central in respect of the suction cup being connected to the plate shaped body, which support element is pivotally connected to the body of the support device and can be locked in respect of the body in certain angular positions, means being connected to the support element for pushing the injector to the windshield.

Now the injector can be brought at the right place above the break in the windshield after the plate shaped body is fixed to the windshield by means of the suction cup. It is obvious that it has to be observed that the place where the suction cup is fixed is chosen such that the break in the wind shield is lying inside the radius of action of the injector.

Because further the support element, to which the strip carrying the injector is clamped, can be locked in certain angular positions in respect of the plate shaped body, it is possible to pivot away the strip carrying the injector together with the support element during repairing the break and to replace it afterwards exactly at the same place.

In view of the fact that the clamping of the strip carrying the injector is taken place centrally in respect of the plate shaped body, the strip automatically has such a length that when the injector, connected to the strip, is pushed towards the windshield, the injector will always be positioned substantially perpendicular to the windshield, so that it is not absolutely necessary to mount the injector pivotally to the strip. The relatively great length of the strip also will contribute to it that this is somewhat resiliently so that also by this the injector, being supported by three legs, will easily come in the right position, perpendicular to the windshield.

According to a further elaboration of the invention it can be provided, that the support element is present at the other side of the plate shaped body as the suction cup and that from the outside a bolt can be screwed in said support element which bolt is provided with a collar and the strip being provided with an opening through which the bolt can pass easily so that the strip can be clamped in the desired position between the support element and the collar of the bolt.

In that case the support element can be provided with a projection extending outwardly from the plate shaped body and being provided with screw thread onto which a pressing ring can be rotated the inner lying edge of which may cooperate with the strip carrying the injector and extending through a sleeve present in the outwardly extending portion of the support element.

In this way primary the strip can be clamped on the support element by means of the bolt while after this by rotating the pressing ring on the support element the strip can be pressed towards the windshield, in such a way that the injector can come to ly firmly against the windshield. If then the injector should not be present exactly on the right place the bolt can be loosened somewhat and by carefully rapping against the strip the injector can be brought on the desired place to be clamped again after this.

A simple embodiment of the device is obtained when the support element is connected to an annular disc rotatably engaging, but axially not movable, the plate shaped body and near its outer circumference being connected to a resiliently mounted handle being provided with a projection which can cooperate with notches provided in a ring extending around the annular disc and being fixedly connected to the plate shaped body in such a way that the handle can be biased away from the ring to make the projection free from the ring so that the support element can be rotated.

As soon the handle is released the projection may come to rest in a notch of the ring so that after rotation, if any, of the support element and so of the strip carrying the injector, the support element can be brought into the same position as before the rotation, the projection being present in the same notch of the ring.

According to another embodiment of the invention the support element, being present at the other side of the plate shaped body as the suction cup, is provided with a radially extending groove in which the strip extends itself, said strip being pressed against the support element by means of a nut.

In this case the support element is limited axially movable along some pins being fixed to a disc which is rotatable but axially not movable mounted in respect to said plate shaped body by means of a ring fixed to said plate shaped body and extending around said disc, the inner axial surface of said ring and the cooperating surface of said disc being stepped so that the disc is held in engagement with the plate shaped body.

Further in said disc an excentrical arranged axially extending spring biased pin is mounted, one end of which can be received in one of a number of recesses shaped in the plate shaped body, while the other end can be engaged by said support element to lock said pin into one of said recesses.

Advantageously the support element is limited in axial direction by means of a bolt being screwed into said support element and freely extending through a bore in said disc, the end extending in a space between said disc and the plate shaped body being confined against axial movement.

To prevent that in case of a strong curved windshield the strip, carrying the injector, is bent too much, the strip can be composed of two pivotally connected portions, a leave spring taking care for it that the portions are held in line with each other as much as possible.

So then the strip will not or nearly not being under bending strain.

In view of the fact that on the side of the plate shaped body not being provided with the legs said support element and further parts are mounted, according to a further elaboration of the invention it is provided, that the column carrying the suction cup, is shiftable over a pin which is mounted on the same side of the plate shaped body as the legs and is rotatable in respect of said body, the movement of the column along the pin taking place by means of at least one handle screwed into the pin and extending outwardly, said handle passing through a slot in the column, the ends of said slot being at a mutual distance in radial and axial direction, said plate shaped body and the column being provided with cooperating means so that the column is not rotatable in respect of said body.

According to a simple embodiment the pin is fixed in respect of the plate shaped body by being provided with a portion with smaller diameter passing through a bore in the plate shaped body and being held in the bore by a plate engaging the other side of the plate shaped body than the collar of the pin which is formed by the portion with smaller diameter, said plate being connected to the pin by means of a bolt.

To obtain a firm connection between the column and the suction cup the column can be provided with a radially extending rim which cooperates with a circular portion of the suction cup which in cross section is U-shaped.

It can be pointed to the European patent application, published under Nr. 0117697, in which Fig. 5 shows a support device consisting of a suction cup and a column extending from this on which a connecting element is rotatably provided and can be secured against displacement. This connecting element is coupled with an arm carrying the injector. The arm is provided with a slot through which a bolt passes by which the arm can be clamped to the connecting element in various positions. In view of the fact that the connecting element is only supported by the suction cup in respect of the windshield, said connecting element will not be in a stable position. Further when moving the injector from the connecting element the arm will come into another position in respect of the surface of the windshield so that by this the injector will make a tilting movement in respect of the windshield. So the suction cup has to be positioned exactly on a given place for obtaining the right position of the injector in respect of the break which has to be repaired. It will not be easy to bring the injector back to the same place after rotation of the connecting element.

The invention is further elucidated by means of two embodiments, shown in the drawing, in which :

Fig. 1 is a side view of a device according to the invention with a cross section of the windshield on which the device is positioned ;

Fig. 2 is a plan view of the device of Fig. 1 ;

Fig. 3 is a cross section of the device mainly over the line III-III in Fig. 2 ;

Fig. 4 is a cross section of a part of the device mainly over the line IV-IV of Fig. 3 ;

Fig. 5 is a cross section of a modified embodiment of a device according to the invention ;

Fig. 6 is an exploded view of the parts of the lower portion of the device of Fig. 5 ; and

Fig. 7 is an exploded view of the parts of the upper portion of the device of Fig. 5.

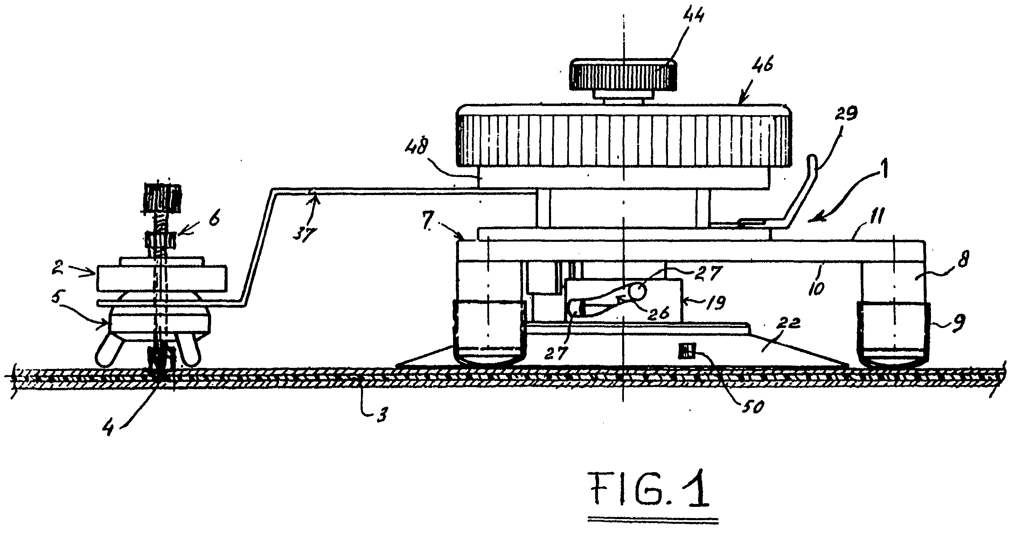

The support device 1 of the embodiment shown in the Figs. 1-4 of the drawing serves for supporting the injector 2 and can be positioned on a laminated windshield 3 to fill up a break 4 in the windshield 3 with plastic material.

To this end the injector 2 comprises the injector foot 5 in which the injector tube 6 can be positioned. Before positioning the injector tube 6 in the injector foot 5 first a tool such as a drillhead can be positioned in it to clean the break 4 before plastic material is injected into it. The injector 2 is working in the same way as this is described in the US-PS-4,291,866 which was mentioned already above, so that this need not to be further elucidated.

The support device 1 comprises the plate shaped body 7 being provided with three legs 8 with protecting caps 9 on it, as e.g. from a plastic material, so that by these caps no scratches can be caused in the windshield 3. For briefness sake in the following the surface 10 of the plate shaped body, which is provided with the legs 8 wil be indicated as the lower surface and the other surface of the plate shaped body 7 as upper surface 11.

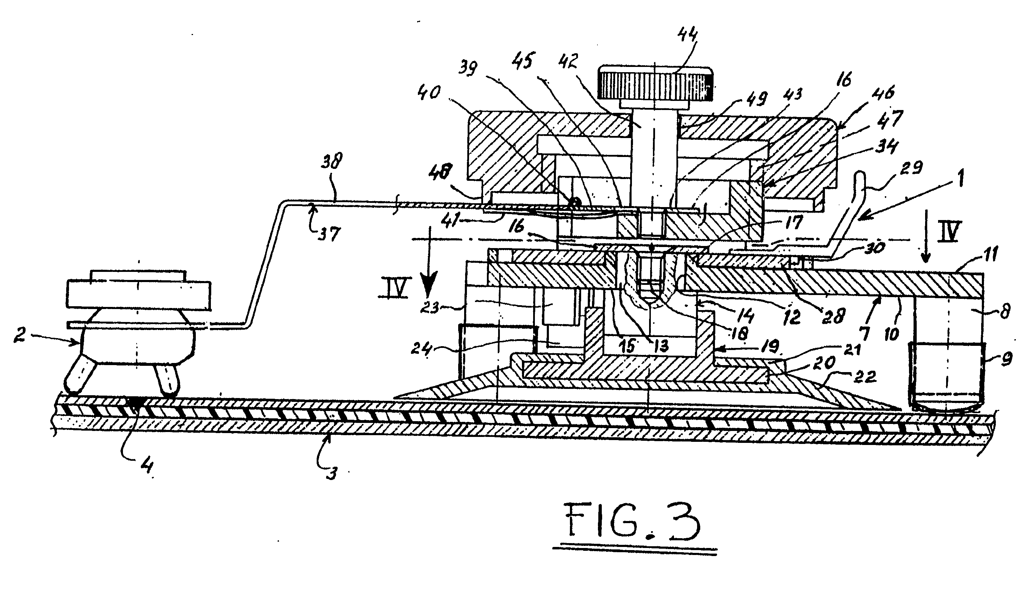

As in particular appears from Fig. 3 the plate shaped body 7 is provided with an opening 12 in which a part 13 is engaged forming a portion of a pin 14 the further of which is having a larger diameter than the part 13 so that a collar 15 is formed with which the pin is engaging the lower surface 10 of the plate shaped body 7.

The pin 14 is rotatably held in the bore 12 by means of a plate 16 engaging a raised portion 17 of the upper surface 11, said plate being held on the pin 14 by means of a screw 18 screwed into the pin 14. The column 19 is shiftable along the pin 14 and is provided with the radially extending rim 20 onto which an U-shaped portion 21 of the suction cup 22 can be positioned so that the suction cup 22 is fixedly connected to the column 19.

The column 19 is shiftable along the pin 14 but is non-rotatable in respect of the plate shaped body 7 in view of the fact that the letter is provided with two lips 23 provided on the lower surface 10 of it, a lip 24 being shiftable between the lips 23 and being connected with the column 19.

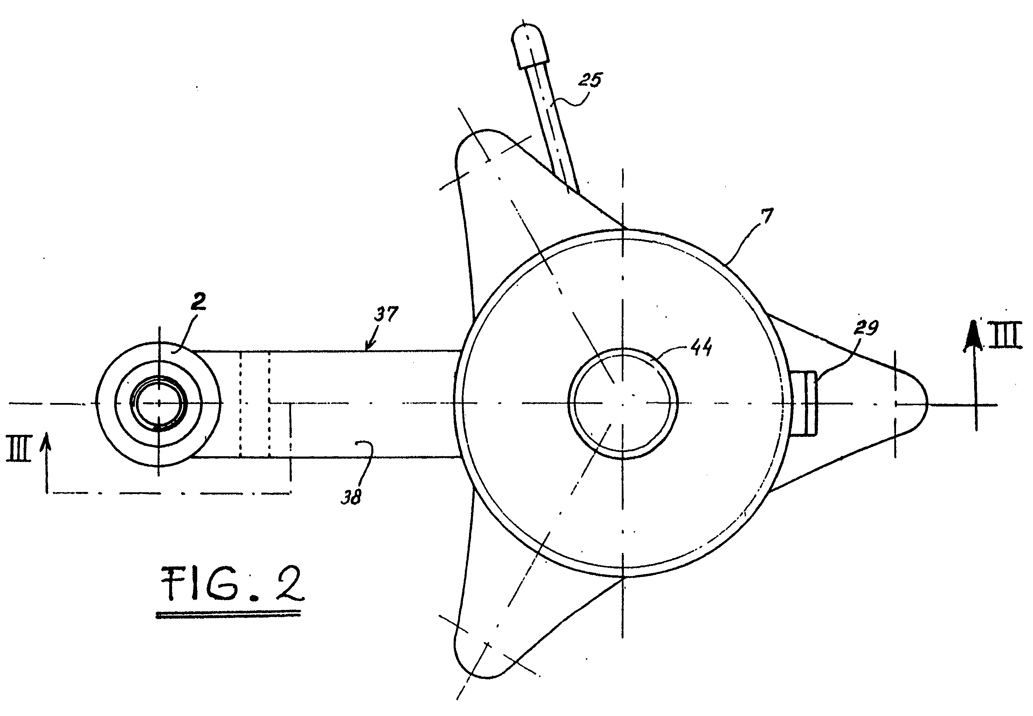

For shifting the column 19 along the pin 14 an outwardly extending handle 25 is provided, see Fig. 2, being screwed into the pin 14 and passing through a slot 26, see Fig. 1, in the column 19. The ends 27 of the slot 26 are at a mutual distance in radial and axial direction so that when the pin 14 is rotated by means of the handle 25 in respect of the plate shaped body 7 and the column 19, the handle 25 is moved from one of the ends of the slot 26 to the other end by which the column 19 is shifted along the pin 14.

An annular disc 28 engages the upper surface 11 of the plate shaped body 7 and is held on its place by means of the plate 16 which is already mentioned above, however, in such a way that the disc is rotatably in respect of the plate shaped body 7.

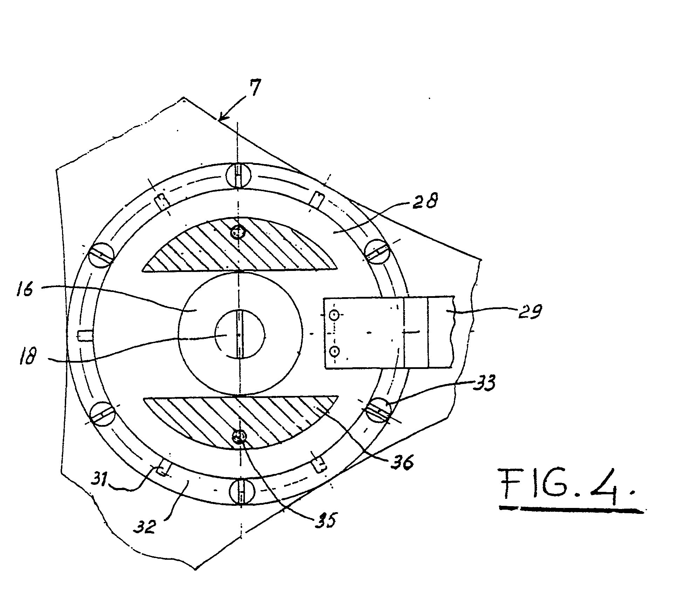

The annular disc 28 is connected to a resilient handle 29, the lower surface of which is provided with a projection 30 positioned outside the circumference of the annular disc 28 but can be comprised in notches 31, see Fig. 4, of an ring 32 which by means of screws 33 is fixed on the plate shaped body 7.

When the handle 29 is pressed upwardly the projection 30 is released from the notch 31 and of the ring 32, so that the annular disc 28 can be rotated to another position but always can be brought back to an equal position.

The support element 34 is connected to the annular disc 28, see Fig. 3, by means of the screws 35, see Fig. 4. To this end the support element 34 is provided with legs 36 engaging the annular disc 28 so that on the one hand a slot remains open through which the handle 29, connected to the annular disc 28 is extending outwardly, on the other hand a slot being shaped through which a strip 37 passes carrying the injector 2.

The strip 37 comprises the two portions 38 and 39 being connected by the pivot 40. The spring leave 41 is engaging the strip portion 38 and 39. The spring leave 41 takes care for it that the strip portion 38 is biased upwardly in respect of the pivot 40.

The strip portion 39 is, together with the spring leave 41 clamped to the support element 34 by means of the bolt 42 being provided with the collar 43 and with the knurled handwheel 44.

To this end the free end of the bolt 42 passes through a slot 45 provided in the strip portion 39, such that the strip 37 as a whole is adjustable in respect of the support device 1 and can be clamped when the injector 2 is positioned at the desired place. It is obvious that the distance over which the strip 37 is movable in its longitudinal direction depends on the length of the slot 45. Rotation of the strip 37 in respect of the support device can take place over each angle so that the support element 34 as a whole can be rotated after using the handle 29 and locking the support element 34 in another position.

To press the strip 37 and in particular the portion 38 of this, towards the windshield 3 a pressing ring 46 is used which is provided with screw thread 47 by which it can be screwed on the support element 34. The pressing ring 46 is provided with the inner lying rim 48 engaging the part 38 of the strip 37 so that this part can be pressed towards the windshield against the biasing force of the leave spring 41. The pressing ring 46 is provided with the bore 49 through which the bolt 42 can pass freely.

When using the device one can operate as follows.

By means of the legs 8 the support device 1 is positioned on such a place of the windshield that the injector 2 is about at the place above a break 4 in the windshield. In particular the support device 1 will be positioned such that it will not hamper the further operations which mainly had to take place near the injector.

Now the suction cup 22 is pressed against the windshield 3 and next to the column 19 is drawn towards the plate shaped body 7 by means of the handle 25 so that a vacuum is generated between the suction cup 22 and the windshield, by which the suction cup is fixedly sucked against the windshield.

Subsequently by means of the handwheel 44 the bolt 42 can be loosened somewhat so that the strip 37 can be shifted and rotated if wanted, so that the injector 2 can exactly be positioned at the desired place after which the strip is clamped again. By means of the pressing ring 46 the pression can be adjusted with which the injector 2 is engaging the windshield 3. Further in the known way the break 4 can be pre-treated after which the plastic material can be injected into it.

For observing whether the wanted result is reached the support element 34 can be released and rotated by means of the handle 29 after loosening the pressing ring 46. If necessary the support element can be brought back to exactly the same position so that after tightening the pressing ring 46 the injector 2 will be in the same position as previously.

After finishing the operation by means of the handle 25 the column 19 can be shifted to its initial position so that the support device 1 can be taken away from the windshield 3.

To release the suction cup 22 more easily of the windshield 3 the suction cup can be provided with extensions 50, see Fig. 1, with which the rim of the suction cup can be deformed so that the vacuum within the suction cup can easily be raised.

In a way not further shown the handle 25 can be provided with a projection which during rotation of the handle to the last mentioned position may engage the portion 50 of the suction cup so that the vacuum within it is substantially automatically raised when the support device has to be removed from the windshield.

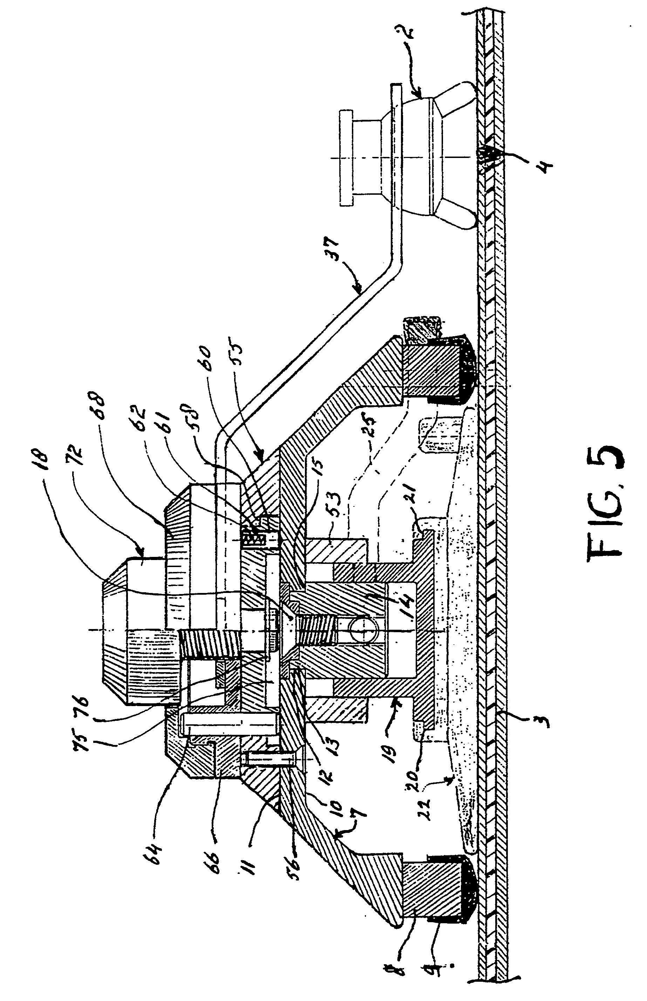

A modified embodiment is shown in the Figs. 5-7. In these Figures corresponding parts are being indicated with the same reference numbers although the shape of some parts may be somewhat different in respect of that of the embodiment shown in the Figures 1-4.

The device 51 shown in the Figs. 5-7 again serves for supporting the injector 2 by means of the strip 37, so that the injector 2 can be positioned on a windshield 3 to fill up a break 4 in the windshield.

The support device 51 comprises the plate shaped body 7 being provided with three legs 8 with protecting caps 9 on it. The body 7 now is somewhat more disc shaped, but this does not make any difference.

The surface 10 of the body 7, which is provided with the legs 8 is again indicated as the lower surface and the other surface of the body 7 as upper surface 11. In the upper surface 11 an opening 12 is provided in which a part 13 is engaged forming a portion of a pin 14 which is further having a larger diameter than the part 13 so that a collar 15 is formed with which the pin is engaging the lower surface 10 of the body 7. The pin 14 is rotatably held in the bore 12 by means of a plate 16 and a screw 18 screwed into the pin 14. The column 19 is shiftable along the pin 14 and is provided with the rim 20 onto which the U-shaped portion 21 of the suction cup 22 can be positioned.

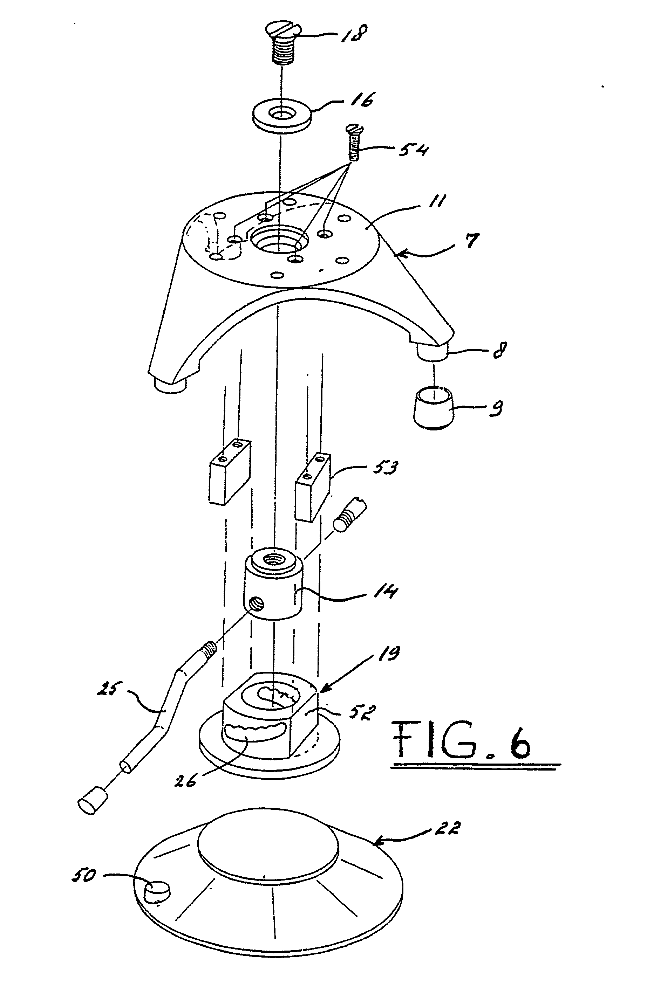

As in particular appears from Fig. 6 the column 19 is provided with two flat portions 52 cooperating with two plates 53 which by means of the screws 54 are connected to the body 7 in such a way that the column 19 is non-rotatably held in respect of the body 7.

In the pin 14 now two outwardly extending handles 25 are screwed which are extending through the slots 26 in the column 19 to move the column 19 up- and downwardly along the pin 14.

So this portion of the device 51 is working in the same way as that of the previous described embodiment.

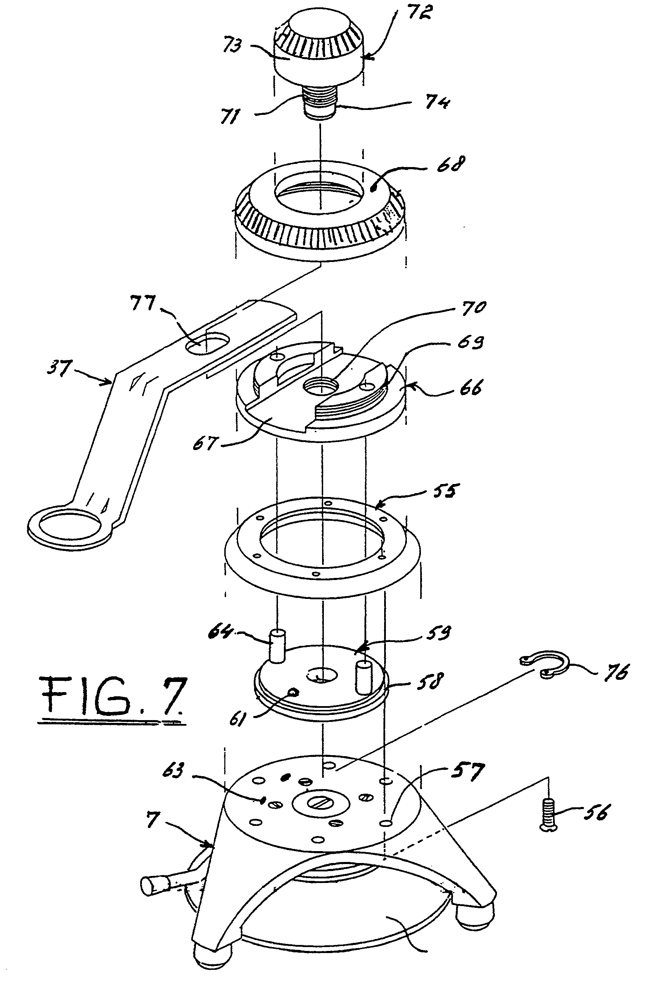

As appears from the Figs. 5 and 7 on the upper surface 11 of the body 7 a ring 55 is fixed by means of the screws 56 running through the bores 57 in the body 7. The inner surface of the ring 55 is stepped at 58 for confining a disc 59 such that this is rotatable in respect of the body 7 but not axially movable.

As appears from Fig. 5 the disc 59 is provided with a bore 60 in which the pin 61 is movable, said pin being biased by means of a spring 62, the other end of which is supported by means indicated below. The lower end of the pin 61 can be engaged in one of a number of recesses 63 provided in the upper surface 11 of the body 7, only some of these being indicated in Fig. 7. The disc 59 is provided with two upstanding pins 64 which can be received in two bores 65 being provided in a support element 66. The support element 66 is further provided with a groove 67 for receiving the strip 37 carrying the injector 2.

The strip 37 is comprised in the groove 67 by means of a nut 68 the screw thread of which is cooperating with the screw thread 69 provided on the support element 66. By this the strip 37 can be firmly held against the support element 66. The support element 66 is centrally provided with a threaded bore 70 in which the threaded portion 71 of a screw 72 can be screwed, said screw being provided with a head 73. The lower portion 74 of the shaft of the screw 72 extends into the space 75 being provided between the disc 59 and the upper surface 11 of the body 7. It is prevented from leaving this space by means of the clamping ring 76. The screw 72 extends freely through the hole 77 provided in the strip 37. When now turning the screw 72 the support element 66 will be moved up- and downwardly along the pins 64. When the support element 66 is moved away from the upper surface 11 of the body 7 the pin 61 can be removed from the recess 63 and the disc 59 together with the support element 66, the strip 37, the nut 68 and the screw 72 can be freely rotated. Afterwards the mentioned parts can be rotated back to the same position after which by means of the screw 72 the support element 66 is pressed towards the surface 11 of the body 7 and by doing this the pin 61 will be pressed into one of the recesses 63 by means of the lower surface of the support element 66. In this way the disc 59 is locked in its place in respect of the body 7 and by this also the support element 66 will be locked in its position.

So the device according to this modified embodiment is mainly working in the same way as the previosuly described embodiment.

Although particular embodiments of the invention have been described and illustrated herein, it will be evident that various modifications are possible without departing from the scope of the invention as the same will now be understood by those skilled in the art and as defined in the appended claims.

## Claims

1. A support device for an injector (2) with which plastic material is injected into a break (4) of a laminated pane in particular a windshield (3) of a motor car, said device comprising : a plate shaped body (7); three legs (8) being connected with said body (7) for supporting the body onto the windshield (3) ; a colum (19) being connected to said body and being movable perpendicularly to the surface of said body ; a suction cup (22) being connected to the column (19) for fixing said body (7) onto the windshield (3) ; means (14, 25, 26) for moving the column (19) in respect of the body (7) ; an arm (37) which is pivotally connected to the body (7) and is carrying said injector (2) and means (46, 72) for pushing said injector (2) to the windshield (3) after the body (7) is fixed to the windshield, characterized in that the arm carrying the injector (2) is formed by a strip (37) the end (39) of which, opposite the end carrying the injector (2) can be clamped on a support element (34, 59, 66) in various positions, within given limits, substantially central in respect of the suction cup (22) being connected to the plate shaped body (7), which support element (34, 59, 66) is pivotally connected to the body (7) of the support device (1) and can be locked in respect of the body (7) in certain angular positions, means (46, 48 ; 68, 72) being connected to the support element (34, 59, 66) for pushing the injector (2) to the windshield (3).

2. A support device according to the claim 1, characterized in that the support element (34) is present at the other side of the plate shaped body (7) as the suction cup (22) and that from the outside a bolt (42) can be screwed into said support element (34), said bolt (42) being provided with a collar (43) and the strip (37) being provided with an opening (45) through which the bolt (42) can pass easily so that the strip (37) can be clamped in the desired position between the support element (34) and the collar (43) of the bolt (42).

3. A support device according to claim 1 or 2, characterized in that the support element (34) is provided with a projection extending outwardly from the plate shaped body (7) and being provided with screw thread (47) onto which a pressing ring (46) is rotatable the inner lying edge (48) of which may cooperate with the strip (37) carrying the injector (2) and extending through a sleeve present in the outwardly extending portion of the support element (34).

4. A support device according to one of the preceding claims, characterized in that the support element (34) is connected to an annular disc (28) rotatably engaging, but axially not movable, the plate shaped body (7) and near its outer circumference being connected to a resiliently mounted handle (29) being provided with a projection (30) which can cooperate with notches (31) provided in a ring (32) extending around the annular disc (28) and being fixedly connected to the plate shaped body (7) in such a way that the handle (29) can be biased away from the ring (32) to make the projection (30) free from the ring (32) so that the support element (34) can be rotated.

5. A support device according to claim 1, characterized in that the support element (66), being present at the other side of the plate shaped body (7) as the suction cup (22), is provided with a radially extending groove (67) in which the strip (37) extends itself, said strip (37) being pressed against the support element (66) by means of a nut (68).

6. A support device according to claim 5, characterized in that the support element (66) is limited axially movable along some pins (64) being fixed to a disc (59) which is rotatable but axially not movable mounted in respect to said plate shaped body (7) by means of a ring (55) fixed to said plate shaped body (7) and extending around said disc (59), the inner axial surface of said ring (55) and the cooperating surface of said disc (59) being stepped (58) so that the disc (59) is held in engagement with the plate shaped body (7).

7. A support device according to claim 6, characterized in that in said disc (59) an excentrical arranged axially extending spring (62) biased pin (61) is mounted, one end of which can be received in one of a number of recesses (63) shaped in the plate shaped body (7) while the other end can be engaged by said support element (66) to lock said pin (61) into one of said recesses (63).

8. A support device according to claim 6 or 7, characterized in that the support element (66) is limited in axial direction by means of a bolt (72) being screwed into said support element (66) and freely extending through a bore in said disc (59), the end (74) extending in a space (75) between said disc (59) and the plate shaped body (7) being confined against axial movement.

9. A support device according to one of the preceding claims, characterized in that the strip (37) is composed of two pivotally connection portions (38, 39), a leave spring (41) taking care for it that the portions (38, 39) are held in line with each other as much as possible.

10. A support device according to one of the preceding claims, characterized in that the column (19) carrying the suction cup (22), is shiftable over a pin (14) being mounted on the same side (10) of the plate shaped body (7) as the legs (8) and being rotatably in respect of said body, the movement of the column (19) along the pin (14) taking place by means of at least one handle (25) screwed into the pin (14) and extending outwardly, said handle (25) passing through a slot (26) in the column (19), the ends (27) of said slot (26) being at a mutual distance in radial and axial direction, said plate shaped body (7) and the column (19) being provided with cooperating means (23, 24 ; 52, 53) so that the column (19) is not rotatable in respect of said body (7).

11. A support device according to claim 10, characterized in that the pin (14) is fixed in respect of the plate shaped body (7) by being provided with a portion (13) with smaller diameter passing through a bore (12) in the plate shaped body (7) and being held in the bore (12) by a plate (16) engaging the other side (11) of the plate shaped body (7) than the collar (15) of the pin (14) which is formed by the portion (13) with smaller diameter, said plate (16) being connected to the pin (14) by means of a bolt (18).

12. A support device according to one of the preceding claims, characterized in that the column (19) is provided with a radially extending rim (20) which cooperates with a circular portion (21) of the suction cup (22) which in cross section is U-shaped.

## Patentansprüche

1. Ständer für eine Einspritzvorrichting (2), mit der Kunststoff in eine beschädigte Stelle (4) eines Verbundglases gespritzt wird, insbesondere einer Glasscheibe (3) eines Kraftfahrzeugs, wobei dieser Ständer umfasst : einen plattenförmigen Körper (7) ; drei mit dem Körper (7) verbundene Füsse (8) zum Unterstützen des Körpers auf der Glasscheibe (3) ; eine mit dem Körper verbundene und rechtwinklig auf der Oberfläche des Körpers bewegliche Säule (19), einen Saugnapf (22) der zum Fixieren der Körpers (7) auf der Glasscheibe (3) mit der Säule (19) verbunden ist ; Mittel (14, 25, 26) zum Bewegen der Säule (19) in bezug auf den Körper (7) ; einen schwenkbar mit dem Körper (7) verbundenen Arm (37), der die Einspritzvorrichtung (2) trägt und Mittel (46, 72) zum Drücken der Einspritzvorrichtung (2) zu der Glasscheibe (3) hin, nachdem der Körper (7) auf der Glasscheibe fixiert ist, dadurch gekennzeichnet, dass der die Einspritzvorrichtung (2) tragende Arm durch einen Streifen (37) gebildet wird, dessen Ende (39) gegenüber dem die Einspritzvorrichtung (2) tragenden Ende, auf einem Stützelement (34, 59, 66) in verschiedenen Stellungen innerhalb bestimmter Grenzen im wesentlichen zentral in bezug auf den mit dem plattenförmigen Körper (7) verbundenen Saugnapf (22) festgeklemmt werden kann, wobei das genannte Stützelement (34, 59, 66) verschwenkbar mit dem Körper (7) des Ständers (1) verbunden ist und in bezug auf den Körper (7) in bestimmten Winkelstellungen verriegelt werden kann, während Mittel (46, 48 ; 68, 72) zum Drücken der Einspritzvorrichtung (2) zu der Glasscheibe (3) hin mit dem Stützelement (34, 59, 66) verbunden ist.

2. Ständer gemäss Anspruch 1, dadurch gekennzeichnet, dass das Stützelement (34) sich an der anderen Seite des plattenförmigen Körpers (7) als der Saugnapf (22) befindet und von aussen ab ein Bolzen (42) in das Stützelement (34) geschraubt werden kann, wobei dieser Bolzen (42) mit einem Kragen (43) versehen ist und der Streifen (37) mit einer Oeffnung (45) versehen ist, durch welche hindurch der Bolzen (42) leicht passieren kann, so dass der Streifen (37) in der gewünschten Stellung zwischen dem Stützelement (34) und dem Kragen (43) des Bolzens (42) geklemmt werden kann.

3. Ständer gemäss Anspruch 1 oder 2, dadurch gekennzeichnet, dass das Stützelement (34) mit einem Vorsprung versehen ist, der sich nach aussen von dem plattenförmigen Körper (7) ab erstreckt und mit Schraubengewinde (47) versehen ist, auf dem ein Druckring (46) drehbar ist, dessen innen liegender Rand (48) mit dem Streifen (37) zusammenwirken kann, der die Einspritzvorrichtung (2) trägt und sich durch einen Schlitz in dem sich nach aussen erstreckenden Teil des Stützelements (34) erstreckt.

4. Ständer nach einem der vorangehenden Ansprüche, dadurch gekennzeichnet, dass das Stützelement (34) mit einer Ringscheibe (28) verbunden ist, die drehbar aber axial nicht versetzbar an dem plattenförmigen Körper (7) anliegt und die bei ihrem Aussenumfang mit einem federnd angeordneten Handgriff (29) verbunden ist, der mit einem Nocken (30) versehen ist, der mit Schlitzen (31) zusammenarbeiten kann, die in einem um die Ringscheibe (28) herum verlaufenden und fest mit dem plattenförmigen Körper (7) verbundenen Ring (32) angeordnet sind, derart dass der Handgriff (29) gegen Federkraft von dem Ring (32) weg gedrückt werden kann um den Nocken (30) von dem Ring (32) zu befreien, so dass das Stützelement (34) gedreht werden kann.

5. Ständer nach Anspruch 1, dadurch gekennzeichnet, dass das an der anderen Seite des plattenförmigen Körpers (7) als der Saugnapf (22) vorgesehene Stützelement (66) mit einer sich radial erstreckenden Nute (67) versehen ist, in welcher der Streifen (37) sich erstreckt, welcher Streifen (37) gegen das Stüzelement (66) mittels einer Schraubenmutter (68) gedrückt wird.

6. Ständer nach Anspruch 5, dadurch gekennzeichnet, dass das Stützelement (66) axial beweglich entlang einiger Stifte (64) begrenzt ist, die an einer Scheibe (59) befestigt sind, die drehbar aber axial nicht beweglich in bezug auf den plattenförmigen Körper (7) mittels eines Ringes (55) angeordnet ist, der an dem plattenförmigen Körper (7) befestigt ist und sich um die Scheibe (59) erstreckt, wobei die axiale Innenoberfläche des Ringes (55) und die zusammenwirkende Oberfläche der Scheibe (59) gestuft (58) sind, so dass die Scheibe (59) im Eingriff mit dem plattenförmigen Körper (7) gehalten ist.

7. Ständer gemäss Anspruch 6, dadurch gekennzeichnet, dass in der Scheibe (59) ein exzentrisch angeordneter, sich axial erstreckender, durch eine Feder vorgespannter Stift (61) angeordnet ist, von dem ein Ende in einer Anzahl Ausnehmungen (63) aufgenommen werden kann, die in dem plattenförmigen Körper (7) geformt sind, während das andere Ende mit dem Stützelement in Kontakt kommen kann um den Stift (61) in einer der Ausnehmungen (63) zu verriegeln.

8. Ständer gemäss Anspruch 6 oder 7, dadurch gekennzeichnet, dass das Stützelement (66) in axialer Richtung mittels eines Bolzens (72) begrenzt ist, der in das Stützelement (66) geschraubt ist und sich frei durch eine Bohrung in der Scheibe (59) erstreckt, wobei das Ende (74) sich in einem Raum (75) zwischen der Scheibe (59) und dem plattenförmigen Körper (7) erstreckt, der gegen axiale Bewegung festgehalten ist.

9. Ständer gemäss einem der vorangehenden Ansprüche, dadurch gekennzeichnet, dass der Streifen (37) aus zwei schwenkbar miteinander verbundenen Teilen (38, 39) besteht, wobei eine Blattfeder (41) dafür sorgt, dass die Teile (38, 39) möglichst gut in der Verlängerung voneinander gehalten werden.

10. Ständer nach einem der vorangehenden Ansprüche, dadurch gekennzeichnet, dass die den Saugnapf (22) tragende Säule (19) über einen Stift (14) verschiebbar ist, der sich auf der mit dem Füssen (8) versehenen Seite (10) des plattenförmigen Körpers (7) befindet und in bezug auf diesen Körper drehbar ist, wobei die Bewegung der Säule (19) über den Stift (14) hin mittels wenigstens eines in dem Stift (14) geschraubten, sich nach aussen erstreckenden Handgriffs (25) erfolgt, der durch einen Schlitz (26) in der Säule (19) verläuft, wobei die Enden (27) dieses Schlitzes (26) sich in radialer und axialer Richtung in einem Abstand voneinander befinden, während der plattenförmige Körper (7) und die Säule (19) mit zusammenarbeitenden Mitteln (23, 24, 52, 53) versehen sind, so dass die Säule (19) in bezug auf dem Körper (7) nicht drehbar ist.

11. Ständer nach Anspruch 10, dadurch gekennzeichnet, dass der Stift (14) in bezug auf den plattenförmigen Körper (7) dadurch festgehalten wird, dass der Stift (14) mit einem Teil (13) mit kleinerem Durchmesser versehen ist, der durch eine Bohrung (12) inm dem plattenförmigen Körper (7) hin verläuft und in der Bohrung (12) durch eine Platte (16) festgehalten wird, die an der anderen Seite (11) des plattenförmigen Körpers (7) als der Kragen (15) des Stiftes (14) anliegft, der durch denm Teil (13) mit kleinerem Durchmesser gebildet wird, welche Platte (16) mittels eines Bolzens (18) mit dem Stift (14) verbunden ist.

12. Ständer nach einem der vorangehenden Ansprüche, dadurch gekennzeichnet, dass die Säule (19) mit einem radial ausragenden Rand (20) versehen ist, der mit einem kreisförmigen Teil (21) des Saugnapfs (22) zusammenwirkt, der einen U-förmigen Querschnitt aufweist.

**Revendications**

1. Dispositif support pour un injecteur (2) grâce auquel une matière plastique est injectée dans une fissure (4) d'une vitre lamifiée en particulier d'un pare-brise (3) d'automobile, ledit dispositif comprenant : une pièce de forme plane (7) ; trois pieds (8) étant reliés à ladite pièce (7) pour supporter la pièce sur le pare-brise (3) ; une colonne (19) étant reliée à ladite pièce et étant mobile perpendiculairement à la surface de ladite pièce ; une coupelle d'aspiration (22) étant reliée à la colonne (19) pour fixer ladite pièce (7) contre le pare-brise (3) ; des moyens pour déplacer la colonne (19) par rapport à la pièce (7) ; à un bras (37) qui est connecté en pivotement à la pièce (7) et qui porte ledit injecteur (2) et des moyens (46, 72) pour pousser ledit injecteur (2) vers le pare-brise (3) lorsque la pièce (7) a été fixée sur le pare-brise, caractérisé en ce que le bras portant l'injecteur (2) est constitué par une bande (37) dont l'extrémité (39) opposée à l'extrémité qui porte l'injecteur (2) peut être fixé sur un élément support (34, 59, 66) en différentes positions dans des limites indiquées, sensiblement centrée par rapport à la coupelle d'aspiration (22) en étant connectée à la pièce de forme plate (7), lequel élément support (34, 59, 66) est fixé en pivotement sur la pièce (7) du dispositif support (1) et peut être bloqué par rapport à ladite pièce (7) en certaines positions angulaires, des moyens (46, 48 ; 68, 72) étant connectés audit élément support (34, 59, 66) dans le but de pousser ledit injecteur (2) vers le pare-brise (3).

2. Dispositif support selon la revendication 1, caractérisé en ce que l'élément support (34) est placé de l'autre côté de la pièce de forme plate (7) et sert de coupelle d'aspiration (22) et en ce qu'à partir de l'extérieur il est possible de visser un boulon (42) dans ledit élément support (34) ledit boulon (42) étant équipé d'un collier (43) et la bande (37) présentant une ouverture (45) à travers laquelle le boulon (42) peut passer facilement afin que la bande (37) puisse être fixée dans la position désirée entre l'élément support (34) et le collier (43) du boulon (42).

3. Dispositif support selon l'une des revendications 1 ou 2, caractérisé en ce que l'élément support (34) comporte un prolongement s'étendant vers l'extérieur à partir de la pièce de forme plane (7) et porte un pas-de-vis (47) sur lequel une bague de pression (46) peut tourner, le bord intérieur (48) de celle-ci pouvant coopérer avec la bande (37) portant l'injecteur (2) et traversant un manchon présent sur la partie s'étendant vers l'extérieur de l'élément support (34).

4. Dispositif support selon l'une des revendications précédentes, caractérisé en ce que l'élément support (34) est connecté à un disque annulaire (28) venant en prise en rotation, mais sans déplacement axial avec la pièce de forme plane (7) et étant connecté vers sa circonférence extérieure à une poignée (29) montée de manière élastique qui comporte une partie en saillie (30) susceptible de coopérer avec des encoches (31) formées dans une bague (32) qui entoure le disque annulaire (28) et étant connectées rigidement à la pièce de forme plane (7) de façon que la poignée (29) puisse être forcée en s'éloignant de la bague (32) afin de libérer la partie en saillie (30) de la bague (32) et de permettre la rotation de l'élément support (34).

5. Dispositif support selon la revendication 1, caractérisé en ce que l'élément support (66) qui se trouve présent sur l'autre face de la pièce de forme plane (7) et sert de coupelle d'aspiration (22) comporte une rainure (67) orientée radialement dans laquelle passe la bande (37) elle-même, ladite bande (37) étant appuyée contre l'élément support (66) au moyen d'un écrou (68).

6. Dispositif support selon la revendication 5, caractérisé en ce que l'élément support (66) est mobile dans la direction axiale de manière limitée par le fait que certaines broches (64) sont fixées à un disque (59) qui est monté en rotation mais sans mouvement axial par rapport à ladite pièce de forme plane (7) au moyen d'une bague (55) fixée à ladite pièce de forme plane (7) et s'étendant autour dudit disque (59), ladite surface axiale intérieure de ladite bague (55) et la surface coopérante dudit disque (59) présentant un décrochement (58) afin que le disque (59) soit maintenu en prise avec la pièce de forme plane (7).

7. Dispositif support selon la revendication 6, caractérisé en ce que dans ledit disque (59) un axe (61) orienté dans la direction axiale en position excentrique est sollicité par un ressort (62), une extrémité dudit axe pouvant être reçue dans l'un des multiples logements (63) profilés dans la pièce de forme plane (7) tandis que l'autre extrémité peut être engagée par ledit élément support (66) afin de bloquer ledit axe (61) à l'intérieur de l'un des dix logements (63).

8. Dispositif support selon l'une des revendications 6 ou 7, caractérisé en ce que l'élément support (66) est limité dans la direction axiale au moyen d'un boulon (72), vissé dans ledit élément support (66) et traversant librement un orifice prévu dans ledit disque (59), l'extrémité (74) de ce goulot pénétrant dans un espace (75) situé entre ledit disque (59) et la pièce de forme plane (7) en étant empêchée de subit un mouvement axial.

9. Dispositif support selon l'une des revendications précédentes, caractérisé en ce que la bande (37) est constituée de deux parties (38, 39) connectées en pivotement, d'une lame de ressort (41) assurant dans la mesure du possible l'alignement des portions (38, 39) entre elles.

10. Dispositif support selon l'une des revendications précédentes, caractérisé en ce que la colonne (19) portant la coupelle d'aspiration (22) peut coulisser sur un axe (14) qui se trouve monté du même côté (10) de la pièce de forme plane (7) que les pieds (8) et étant mobile en rotation par rapport à ladite pièce, le mouvement de la colonne (19) le long de l'axe (14) étant commandé par au moins une poignée (25) vissée dans l'axe (14) et se prolongeant vers l'extérieur, ladite poignée (45) traversant une fente (26) formée dans la colonne (19), les extrémités (27) de ladite fente (26) se trouvant à une certaine distance mutuelle dans la direction radiale et dans la direction axiale, ladite pièce de forme plane (7) et la colonne (9) étant équipée de moyens de coopération (23, 24 ; 52, 53) de façon que la colonne (19) ne puisse pas subir un mouvement de rotation par rapport à ladite pièce (7).

11. Dispositif support selon la revendication 10, caractérisé en que l'axe (14) est fixe par rapport à la pièce de forme plane (7) du fait qu'il comporte une partie (13) de diamètre inférieur traversant un orifice (12) prévu dans la pièce de forme plane (7) et en étant maintenu dans l'orifice (12) par une plaque (16) qui vient en prise avec l'autre face (11) de la pièce de forme plane (7) par rapport au collier (15) de l'axe (14) qui comporte une partie (13) de plus petit diamètre, ladite plaque (16) étant fixée à l'axe (14) au moyen d'un boulon (18).

12. Dispositif support selon l'une des revendications précédentes, caractérisé en ce que la colonne (19) porte un rebord (20) orienté radialement qui coopère avec une partie circulaire (21) de la coupelle d'aspiration (22) qui a une section droite en forme de U.

FIG.1

FIG. 2

EP 0 296 671 B1

FIG.3

EP 0 296 671 B1

FIG.4.

FIG. 5

EP 0 296 671 B1

18
16
54
11
7
8
9
53
14
25
19
52
26
FIG.6
22
50

FIG. 7.